# EUROPÄISCHE PATENTSCHRIFT

(11) **EP 2 291 329 B1**
(45) Veröffentlichungstag und Bekanntmachung des Hinweises auf die Patenterteilung: **04.01.2012**
(21) Anmeldenummer: 09753661.9
(22) Anmeldetag: 26.05.2009
(51) Int. Cl.: C02F 1/32, B63B 17/00

(54) **VORRICHTUNG ZUR REINIGUNG VON FLÜSSIGKEITEN, INSBESONDERE ZUR REINIGUNG VON BALLASTWASSER**
APPARATUS FOR PURIFYING LIQUIDS, IN PARTICULAR BALLAST WATER
DISPOSITIF D'ÉPURATION DE LIQUIDES, EN PARTICULIER D'ÉPURATION D'EAUX DE LESTAGE

(30) Priorität: 26.05.2008 DE 102008025168
(43) Veröffentlichungstag der Anmeldung: 09.03.2011
(73) Patentinhaber: Aalborg Industries Water Treatment Pte. Ltd., Singapore 916409 (SG)
(72) Erfinder: MÜLLER, Uwe, CH-9320 Arbon (CH); RIGGERS, Wilfried, 27432 Bremervörde (DE)
(74) Vertreter: Krauss, Jan
(86) Internationale Anmeldenummer: PCT/EP2009/003731
(87) Internationale Veröffentlichungsnummer: WO 2009/144006

(56) Entgegenhaltungen:
- WO-A-2004/002895
- WO-A-2007/130029
- WO-A-2008/039147
- OEMCKE D: "THE TREATMENT OF SHIPS' BALLAST WATER" INTERNET CITATION, [Online] XP002210574 Gefunden im Internet: URL:http://www.pcq.com.au/pdf/pauline2.pdf > [gefunden am 2002-08-22]
- TAYLOR A ET AL: "Suggested Designs to Facilitate Improved Management and Treatment of Ballast Water on New and Existing Ships"[Online] 26. Mai 2007 (2007-05-26), XP002539086 Gefunden im Internet: URL:http://www.daffa.gov.au/__data/assets/ pdf_file/0018/23661/rep12.pdf> [gefunden am 2009-07-28] -& DIGITAL-DETECTIVE.CO.UK: "WebDate - Bildschirmaufnahme zum Nachweis des Zeitpunkts der letzten Änderung der Internetseite von XP002539086" WEBDATE, 28. Juli 2009 (2009-07-28), XP002539087

## Beschreibung

Die Erfindung betrifft eine Vorrichtung zur Reinigung von Flüssigkeiten, insbesondere zur Reinigung von Ballastwasser.

Ballastwasser wird von Seeschiffen aufgenommen, um das Schiff zu stabilisieren und dessen Seetauglichkeit auf Leerfahrten zu gewährleisten. Hierzu wird Meer- bzw. Flusswasser in spezielle Ballastwassertanks oder, bei den mittlerweile üblichen doppelwandigen Schiffsrümpfen, in den Hohlraum zwischen den beiden Bordwänden des Schiffsrumpfes aufgenommen. Durch Aufnahme von Ballastwasser an einem ersten Ort und Abgabe desselben an einem zweiten Ort kommt es regelmäßig zur Verschleppung von Organismen in fremde Ökosysteme (Neozoa-Problematik).

Zur Abhilfe sind Seeschiffe üblicherweise mit groben, mechanischen Filtern zum Filtrieren des aufgenommenen Ballastwassers versehen. Nachteilig hierbei ist, dass die Filter, die beispielsweise aus maschendrahtähnlichen Gittern aufgebaut sind, eine regelmäßige Wartung und Reinigung erforderlich machen.

In manchen Fällen wird das zum Teil über Wochen gespeicherte Ballastwasser bei dessen Abgabe zur Desinfektion mit UV-Licht behandelt (siehe z.B. WO2007/130029A1). Nachteilig hierbei ist, dass beispielsweise als Jungtiere bzw. Larven in den Ballastwassertank gelangte Lebewesen, wie etwas Fische oder Krebse, im Tank zu adulten Tieren heranwachsen können, die eine solche UV-Behandlung relativ unbeschadet überstehen. Ferner macht die zum Teil über Wochen stark angewachsene Population von Mikroorganismen und Algen eine hohe UV-Intensität und somit einen hohen Energieaufwand erforderlich. Als Alternative zur UV-Behandlung wird teilweise eine Behandlung des Ballastwassers mit Chlor vorgenommen. Jedoch stellt die Abgabe von stark chlorbelastetem Wasser einen ebenfalls sehr kritischen Eingriff in das lokale Ökosystem dar.

Die aus dem Stand der Technik bekannten Verfahren und Anlagen zur Reinigung von Ballastwasser bieten somit nur eine geringe Flexibilität, Zuverlässigkeit und/oder Umweltverträglichkeit bei der Ballastwasserbehandlung. Ferner erfordern bekannte Verfahren und Anlagen zur Ballastwasserbehandlung einen relativ hohen Wartungsaufwand, ohne jedoch einen ausreichenden Schutz vor Verschleppung von Organismen in fremde Ökosysteme zu bieten.

Eine Aufgabe der vorliegenden Erfindung besteht somit darin, eine Vorrichtung zur Reinigung von Flüssigkeiten, insbesondere zur Reinigung von Ballastwasser, bereitzustellen, welche mit geringem Aufwand und hoher Flexibilität zuverlässig betreibbar ist und einen ausreichenden Reinheitsgrad der gespeicherten Flüssigkeit gewährleisten kann.

Diese Aufgabe wird gelöst von der Merkmalskombination nach Anspruch 1. Vorteilhafte Ausführungsformen sind in den Unteransprüchen beschrieben.

Die erfindungsgemäße Vorrichtung zur Reinigung von Flüssigkeiten, insbesondere von Ballastwasser, umfasst mindestens zwei Filtermodule und einen Reaktor mit mindestens einer UV-Lichtquelle. Jedes Filtermodul umfasst einen Einlass für zu reinigende Flüssigkeit, einen ersten Auslass, einen Filter und einen zweiten Auslass für gefilterte Flüssigkeit, wobei der erste Auslass für in das Filtermodul einströmende Flüssigkeit vor dem Filter und der zweite Auslass hinter dem Filter angeordnet ist. Der erste Auslass und der zweite Auslass liegen somit auf unterschiedlichen Seiten des Filters.

Die in das jeweilige Filtermodul über den Einlass einströmende zu reinigende Flüssigkeit kann somit, ohne durch den Filter zu treten, über den ersten Auslass aus dem Filtermodul wieder herausströmen. Ebenso kann die über den Einlass einströmende zu reinigende Flüssigkeit durch den Filter treten und über den zweiten Auslass das Filtermodul verlassen.

Der Reaktor der Vorrichtung ist mit den ersten Auslässen über eine erste Leitung verbunden, über die ein erster Volumenstrom an den Reaktor geleitet werden kann. Mit den zweiten Auslässen ist der Reaktor über eine zweite Leitung verbunden, über die ein zweiter Volumenstrom an den Reaktor geleitet werden kann. Ferner ist der Reaktor dazu eingerichtet, sowohl den ersten als auch den zweiten Volumenstrom der Strahlung der UV-Lichtquelle auszusetzen.

Der Vorteil dieser Vorrichtung besteht in seiner hohen Flexibilität, da insbesondere die folgenden drei Möglichkeiten zur Reinigung der Flüssigkeit, also insbesondere des Ballastwassers, bestehen:
Zunächst bietet die Vorrichtung die Möglichkeit, dass die zu reinigende Flüssigkeit über den ersten Auslass ungefiltert aus dem Filtermodul laufen und nachfolgend als erster Volumenstrom (nur) der UV-Behandlung zugeführt werden kann.

Weiterhin bietet die Vorrichtung die Möglichkeit, dass die zu reinigende Flüssigkeit bereits vor der nachfolgenden UV-Behandlung von Lebewesen, Organismen und sonstigen Schwebstoffen bis zu einer bestimmten Größe durch Filtrierung in den Filtermodulen befreit wird. Hierdurch wird die sich unmittelbar (räumlich wie zeitlich) anschließende UV-Behandlung entlastet, so dass diese mit geringerem Energieaufwand betrieben werden kann.

Ferner können in einer dritten Möglichkeit die Vorzüge der ersten beiden Möglichkeiten kombiniert werden: In einem ersten Volumenstrom gelangt der Teil der zu reinigenden Flüssigkeit, die ein jeweiliges Filtermodul über den ersten Auslass verlässt, zu dem Reaktor und wird darin mit UV-Licht behandelt. Gleichzeitig kann in einem zweiten Volumenstrom der verbleibende Teil der zu reinigenden Flüssigkeit, der über den zweiten Auslass aus dem jeweiligen Filtermodul strömt, in Form eines zweiten Volumenstroms an den Reaktor geleitet und getrennt von dem ersten Volumenstrom mit UV-Licht behandelt werden.

Durch das Vorsehen getrennter Volumenströme kann somit beispielsweise die Kontaktzeit, über welche der jeweilige Volumenstrom der UV-Strahlung ausgesetzt wird, flexibel und unabhängig voneinander eingestellt werden. Somit ist eine flexible Behandlung der zu reinigenden Flüssigkeit in einem ersten und/oder zweiten Volumenstrom in Abhängigkeit von dem Verunreinigungsgrad und/oder zu erzielenden Reinheitsgrad der Flüssigkeit möglich.

Bevorzugt wird hierzu der erste Volumenstrom und der zweite Volumenstrom getrennt voneinander durch den Reaktor geleitet. Bevorzugt werden ferner der jeweils separat geführte erste und zweite Volumenstrom möglichst nahe an der UV-Lichtquelle des Reaktors vorbeigefiihrt.

In einer bevorzugten Ausführungsform sind die zweiten Auslässe über eine Rückspül-Leitung derart miteinander verbunden, dass eine Rückspülung des Filters des einen Filtermoduls mit gefilterter Flüssigkeit des anderen Filtermoduls erfolgen kann. Der Vorteil dieser Vorrichtung besteht darin, dass im laufenden Betrieb ein Rückspülen eines Filtermoduls erfolgen kann, während das andere Filtermodul normal weiterarbeitet. Ein zuverlässiger Dauerbetrieb wird hierdurch ermöglicht.

Bevorzugt weist der Einlass jedes Filtermoduls ein Ventil auf. Ebenso bevorzugt weist der erste Auslass jedes Filtermoduls ein eigenes Ventil auf. Eine kontrollierte und flexible Regulierung des Zulaufs und des Ablaufs in das jeweilige Filtermodul ist hierdurch möglich. Zur vorstehend genannten Rückspülung des Filters des einen Filtermoduls wird dessen Einlassventil geschlossen und dessen Ventil des ersten Auslasses geöffnet. Ferner kann jeder zweite Auslass mit einem regelbaren Ventil versehen sein.

Bevorzugt ist die Vorrichtung dazu eingerichtet, dass die durch den Filter des einen Filtermoduls rückgespülte Flüssigkeit über die erste Leitung als erster Volumenstrom an den Reaktor geleitet wird. Die erfindungsgemäße Vorrichtung bietet somit den Vorteil, dass rückgespülte Flüssigkeit über die erste Leitung separat durch den Reaktor geleitet und einer separaten Behandlung unterzogen werden kann im Vergleich zu gefilterter Flüssigkeit, die über die zweite Leitung zum Reaktor strömen kann.

Bevorzugt weist die Vorrichtung ein erstes Behältnis zum Speichern zu reinigender Flüssigkeit auf, welches mit den Einlässen verbunden ist. Besonders bevorzugt weist die Vorrichtung ferner ein zweites Behältnis auf, welches in der ersten Leitung angeordnet und dazu eingerichtet ist, Flüssigkeit zwischenzuspeichern. Hierdurch wird es ermöglicht, die (rückgespülte) Flüssigkeit zwischenzuspeichern und beispielsweise mit einem sehr geringen Durchsatz durch den Reaktor zu leiten und somit die Kontaktzeit für die rückgespülte (also stärker verunreinigte und kontaminierte) Flüssigkeit zu erhöhen.

Besonders bevorzugt umfasst der Reaktor ferner einen Ultraschallquelle zur Beaufschlagung des ersten und des zweiten Volumenstroms mit Ultraschall. Durch die durch Ultraschall hervorgerufene Kavitation kommt es zur Schädigung und Abtötung von Mikroorganismen und sonstigen organischen/anorganischen gelösten bzw. suspendierten Stoffen in der zu reinigenden Flüssigkeit, die von der vorhergehenden Filtrierung nicht erfasst worden sind. Hierdurch wird der erzielbare Reinheitsgrad der Flüssigkeit sowie die Performance der Vorrichtung weiter erhöht und die Flexibilität der gesamten Vorrichtung verbessert.

In einer besonders bevorzugten Ausführungsform umfasst der Reaktor einen in ein Reaktorinneres führenden Zulauf und einen aus dem Reaktorinneren führenden Ablauf. Bevorzugt sind die UV-Lichtquelle und/oder die Ultraschallquelle im Reaktorinneren angeordnet. Die resultierende Beaufschlagung des Reaktorinneren mit Ultraschall sorgt, neben einer Reinigung der vorbeiströmenden Flüssigkeit(en), für eine fortwährende Reinigung der mit der/den Flüssigkeit(en) in Kontakt kommenden Oberflächen von Ablagerungen jeglicher Art, wodurch ein zuverlässiger Dauerbetrieb gewährleistet ist.

In einer besonders bevorzugten Ausführungsform ist die zweite Leitung mit dem Zulauf des Reaktors derart verbunden, dass der zweite Volumenstrom über den Zulauf in das Reaktorinnere hinein- und über den Ablauf aus dem Reaktorinneren herausläuft. In Abhängigkeit von der Dimensionierung des Reaktors kann somit ein relativ hoher Durchsatz der gefilterten Flüssigkeit durch das Reaktorinnere erzielt werden. Besonders bevorzugt umfasst der Reaktor ferner eine Flüssigkeitsleitung, die das Reaktorinnere durchsetzt und im Reaktorinneren vom Reaktorinneren insbesondere flüssigkeitsdicht abgeschlossen ist. Die Flüssigkeitsleitung bietet somit die Möglichkeit, einen vom Reaktorinneren getrennten Volumenstrom zu reinigender Flüssigkeit durch das Reaktorinnere zu leiten, ohne diesen mit dem Reaktorinneren bzw. einer darin befindlichen Flüssigkeit in unmittelbaren Kontakt treten zu lassen.

Besonders bevorzugt ist hierzu die den Reaktor durchsetzende Flüssigkeitsleitung mit der ersten Leitung derart verbunden, dass der erste Volumenstrom über die Flüssigkeitsleitung durch das Reaktorinnere läuft. Hierdurch wird gewährleistet, dass der erste Volumenstrom getrennt von dem zweiten Volumenstrom durch das Innere des Reaktors und an der UV-Lichtquelle und gegebenenfalls der Ultraschallquelle vorbeigeführt wird, wodurch eine getrennte Behandlung des ersten Volumenstroms im Vergleich zum zweiten Volumenstrom möglich und ein Durchmischen des ersten und des zweiten Volumenstroms im Reaktor verhindert wird.

Besonders bevorzugt ist die Flüssigkeitsleitung aus UV-durchlässigem Material gefertigt. Speziell kann die Flüssigkeitsleitung ein oder mehrere Quarzrohre umfassen.

Die Quarzrohre können insbesondere parallel gelegt sein. Alternativ können die Quarzrohre derart miteinander verbunden sein, dass sie in Reihe liegen. Bei parallel gelegten Quarzrohren besteht der Vorteil, dass ein relativ hoher Durchsatz erzielt werden kann. Bei in Reihe gelegten Quarzrohren besteht der Vorteil, dass die durch die Quarzrohre und somit durch das Reaktorinnere laufende Flüssigkeit einer mehrfachen Reinigung unterzogen wird.

Der Reaktor kann bevorzugt auch von mindestens einem Quarzrohr durchsetzt sein, in dem die UV-Lichtquelle beziehungsweise, bei mehreren UV-Lichtquellen, jeweils eine UV-Lichtquelle angeordnet ist.

In einer besonders bevorzugten Ausführungsform umfasst der Filter jedes Filtermoduls eine Membran. Bevorzugt umfasst jedes Filtermodul ferner eine Ultraschallquelle zum Bestrahlen der Membran mit Ultraschall. Hierzu ist die Membran aus einem Material gebildet, welches einer Ultraschallbehandlung standhält, beispielsweise aus Edelstahl oder anderen metallischen Legierungen. Durch die Ultraschallbestrahlung wird sowohl im Betrieb als auch beim Rückspülen der Membran ein Zusetzen der Membran mit Ablagerungen verhindert. Bevorzugt ist die Ultraschallquelle für in das Filtermodul einströmende Flüssigkeit vor dem Filter angeordnet, also auf der üblicherweise stärker verunreinigten Seite des Filters.

Die Membran kann Poren von weniger als 1000 µm, bevorzugt von weniger als 100 µm und am meisten bevorzugt von weniger als etwa 50 µm aufweisen. Für die Ballastwasseraufbereitung ist eine Porengröße von höchstens etwa 30 µm vorteilhaft. Zur Mikrofiltration können auch Poren mit eine Porengröße von bis herab zu 0,1 µm zum Einsatz kommen.

Insbesondere kann die Vorrichtung auch mehr als zwei Filtermodule umfassen, die untereinander im vorstehenden Sinne zum Rückspülen verbunden sind.

Zudem können auch (jeweils) zwei Filtermodule dadurch in Serie miteinander verbunden sein, dass der erste Auslass des (jeweils) ersten Filtermoduls mit dem Einlass des (jeweils) zweiten Filtermoduls verbunden ist. Insbesondere bei sehr stark verunreinigter zu reinigender Flüssigkeit kann in dem ersten Filtermodul eine Vorreinigung und in dem zweiten Filtermodul eine Hauptreinigung/-filtrierung erfolgen.

Besonders bevorzugt ist die gesamte Vorrichtung zur Behandlung von salzhaltigem Wasser, insbesondere Meerwasser ausgelegt.

Insbesondere besteht eine erfindungsgemäße Verwendung der vorstehend beschriebenen Vorrichtung zur Reinigung von Flüssigkeiten im Behandeln von Ballastwasser. Abwechselnd kann hierbei je eines der Filtermodule rückgespült werden.

Weitere Merkmale und Vorteile der Erfindung sind in der nachfolgenden Beschreibung von Ausführungsformen anhand der beigefügten Zeichnungen und in den Ansprüchen dargestellt.
Figur 1 zeigt eine schematische Darstellung einer erfindungsgemäßen Vorrichtung zur Reinigung von Flüssigkeiten;
Figur 2 zeigt eine detaillierte Darstellung einer Ausführungsform der erfindungsgemäßen Vorrichtung;
Figuren 3-7 zeigen die Verwendung der in Figur 2 dargestellten erfindungsgemäßen Ausführungsform der Vorrichtung beim Behandeln von Ballastwasser.
Figur 8 zeigt eine Ausführung mit paarweise in Serie geschalteten Filtermodulen.

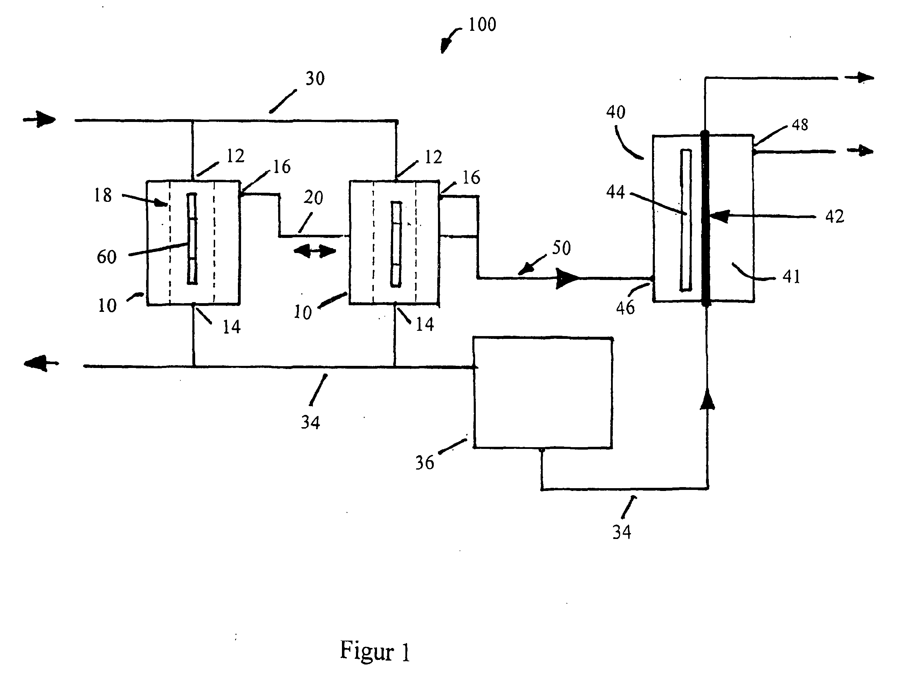

Figur 1 zeigt schematisch eine Ausführungsform der Vorrichtung zur Reinigung von Flüssigkeiten.

Die Vorrichtung 100 umfasst zwei Filtermodule 10, die jeweils die Form eines hohlen Kreiszylinders aufweisen und aus einem Edelstahlrohr gebildet sind, das an seinen beiden Enden verschlossen ist. An dem oberen Ende jedes Filtermoduls befindet sich ein Einlass 12 für zu reinigende Flüssigkeit und an dem unteren Ende befindet sich ein erster Auslass 14 für die Flüssigkeit. An dem Rohrmantel des Filtermoduls 10 ist ferner nahe dem oberen Ende ein zweiter Auslass 16 vorgesehen.

Im Inneren des Filtermoduls 10 befindet sich eine Edelstahlmembran mit Poren von etwa 30 µm. Die Edelstahlmembran 18 weist ebenfalls die Form eines hohlen Kreiszylinders auf, welcher im Wesentlichen im Edelstahlrohr des Filtermoduls 10 koaxial (d.h., im Querschnitt konzentrisch) angeordnet ist, wobei der Durchmesser der Edelstahlmembran kleiner als der Durchmesser des Filtermoduls 10 ist. Der Einlass 12 und der erste Auslass 14 sind in etwa in der Mitte des kreisförmigen oberen beziehungsweise unteren Endes des Filtermoduls 10 (d.h., des Deckels bzw. des Bodens) angeordnet. Somit kann über den Einlass 12 in das Innere des Filtermoduls 10 einlaufende Flüssigkeit über den ersten Auslass 14 aus dem Filtermodul 10 herauslaufen, ohne die zylindrische Filtermembran 18 zu durchsetzen. In diesem Sinne ist der erste Auslass 14 somit vor der Filtermembran 18 angeordnet. Im Gegensatz dazu kann in das Filtermodul 10 über den Einlass 12 einfließende Flüssigkeit nur dann über den zweiten Auslass 16 aus dem Filtermodul 10 gelangen, wenn sie zuvor durch die Filtermembran 18 getreten ist. In diesem Sinne liegt der zweite Auslass 16 jeweils hinter der Filtermembran 18.

Über einer Rückspülleitung 20 sind die beiden zweiten Auslässe 16 miteinander zum Austausch von Flüssigkeit verbunden.

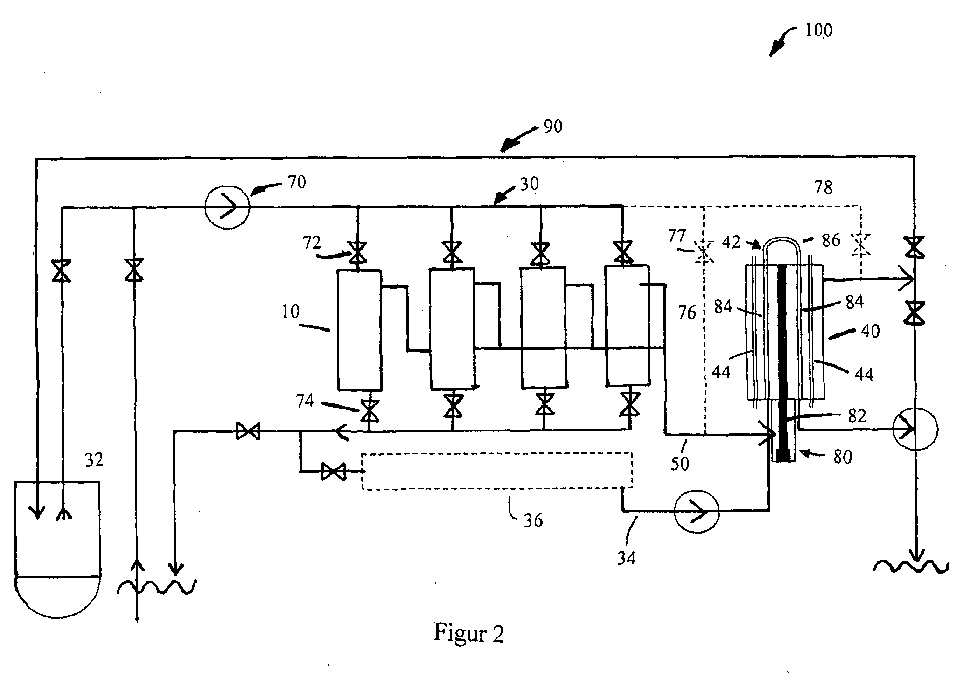

Wie in Figur 1 dargestellt, ist jedes Filtermodul 10 an seinem jeweiligen oberen Ende über den Einlass 12 an eine Flüssigkeitszufuhr 30 angeschlossen, welche aus einem ersten Behältnis 32 in Form eines Ballastwassertanks (in Figur 1 nicht dargestellt; vgl. Figur 2) gespeist wird.

Am entgegengesetzten Ende ist jedes Filtermodul 10 über den ersten Auslass 14 an eine erste Leitung 34 angeschlossen. In der ersten Leitung 34 ist ein zweites Behältnis 36 als Zwischenspeicher für Flüssigkeit vorgesehen.

Die erste Leitung 34 führt zu einem länglichen Reaktor 40, welcher ein Reaktorinneres 41 umschließt. Das Reaktorinnere 41 wird in Längsrichtung durchsetzt von einer Flüssigkeitsleitung 42, die aus einem Quarzrohr gebildet ist. Ferner erstreckt sich im Reaktorinneren 41 eine längliche UV-Lichtquelle 44, die ebenso wie das Quarzrohr im Wesentlichen parallel zur Längsachse des Reaktors 40 angeordnet ist. Die erste Leitung 34 mündet am in Längsrichtung unteren Ende des Reaktors 40 in die Flüssigkeitsleitung 42 in Form eines Quarzrohres. Die Flüssigkeitsleitung 42 führt am anderen Ende des Reaktors 40 aus dem Reaktorinneren 41 heraus und geht über in eine weitere Flüssigkeitsleitung, beispielsweise aus Quarz oder aus Fiberglas. Zwar sind in den Figuren nur gerade, gestreckte Ausführungen gezeigt, denkbar ist aber auch, insbesondere für die Flüssigkeitsleitung 42, eine spiral- bzw. wendelförmige Bauform, wobei die Flüssigkeitsleitung 42 beispielsweise jeweils eine in einem Quarzrohr angeordnete UV-Lichtquelle 44 im absoluten Nahbereich umgibt (nicht dargestellt).

Der Reaktor 40 weist im Wesentlichen die Form eines hohlen Kreiszylinders auf, und ist auf seiner Mantelfläche nahe dem unteren Ende mit einem Zulauf 46 und nahe seinem oberen Ende mit einem Ablauf 48 versehen. Die zweiten Auslässe 16 der Filtermodule 10 sind über eine zweite Leitung 50 mit dem ins Reaktorinnere 41 führenden Zulauf 46 verbunden.

Jedes Filtermodul 10 ist ferner mit einer im Wesentlichen stabförmigen Ultraschallquelle 60 versehen, die in der hohlzylindrischen Form des Filtermoduls 10 leicht versetzt zu dessen Längsachse (d. h. exzentrisch) angeordnet ist. In gleicher Weise ist im Reaktorinneren 41 eine exzentrische Ultraschallquelle (nicht gezeigt) angeordnet. Die Ultraschallquellen sorgen jeweils für eine Reinigung der Flüssigkeiten und eine Reinigung des Filtermoduls 10, speziell des Filters 18, bzw. des Reaktors 40.

Weitere Details der Vorrichtung 100 sowie die Funktion und Wirkung der Elemente der Vorrichtung 100, sowohl einzeln, als auch in Kombination, werden nun anhand der Figuren 2-7 dargestellt.

Figur 2 zeigt eine Ausführungsform der Vorrichtung 100, welche als Ballastwasser-Reinigungsanlage dient. Wie in Figur 2 dargestellt ist, ist in der Flüssigkeitszufuhr 30 eine Ballastwasserpumpe 70 vorgesehen, um Wasser entweder aus dem Meer oder aus dem Ballastwassertank 32 zu den Einlässen 12 der Filtermodule zu pumpen. Jeder Einlass 12 der vier dargestellten Filtermodule 10 umfasst jeweils ein Einlassventil 72 zur Steuerung des Zuflusses in das jeweilige Filtermodul 10. Ebenso weist jeder erste Auslass 14 ein Ventil 74 zum Steuern des aus dem ersten Auslass 14 austretenden Flüssigkeitsstromes auf. Die in Figur 2 gezeigte Ausführungsform weist ferner eine erste Umgehungsleitung 76 und eine zweite Umgehungsleitung 78 auf. Die erste Umgehungsleitung verbindet die Flüssigkeitszufuhr 30 mit der zweiten Leitung 50. Somit kann bei geschlossenen Einlassventilen 72 aller Filtermodule 10 die zu behandelnde Flüssigkeit ohne vorherige Filtrierung über einen Bypass in den Reaktor 40 geleitet werden. Die zweite Umgehungsleitung 78 verbindet die Flüssigkeitszufuhr 30 mit der an den Auslass 48 des Reaktors 40 angeschlossenen Flüssigkeitsleitung. Somit kann bei geschlossenen Einlassventilen 72 aller Filtermodule 10 und geschlossenem ersten Umgehungsventil 77, welches in der ersten Umgehungsleitung 76 angeordnet ist, die Flüssigkeit ohne durch die Filtermodule 10 beziehungsweise den UV-Reaktor 40 zu laufen, zurück ins Meer gepumpt werden.

Wie in Figur 2 dargestellt ist, weist der Reaktor 40 an seinem unteren Ende eine Kavitationskammer 80 auf, die im Vergleich zum oberen Teil des Reaktors 40 einen geringeren Durchmesser aufweist und in die der Flüssigkeitszulauf 46 des Reaktors 40 mündet. Im Reaktorinneren 41 erstreckt sich über die gesamte Länge des Reaktors 40, das heißt durch die Kavitationskammer 80 und den sich daran anschließenden oberen Teil des Reaktors 40, eine stabförmige Ultraschallquelle 82, welche leicht versetzt zur Längsachse des Reaktors 40, das heißt, im Querschnitt exzentrisch, angeordnet ist. Ferner durchsetzen das Reaktorinnere 41 im oberen Teil des Reaktors 40 zwei Quarzrohre (in Fig. 2 nicht dargestellt), in denen jeweils eine der in Fig. 2 dargestellten UV-Lichtquellen 44 angeordnet ist. Ebenso wird das Reaktorinnere 41 von zwei weiteren Quarzrohren 84 durchsetzt, welche die Flüssigkeitsleitung 42 bilden, wobei eines der Quarzrohre 84 an seinem unteren Ende mit der ersten Leitung 34 verbunden ist. An dem anderen Ende ist dieses Quarzrohr 84 über eine Rohrverbindung 86 mit dem entsprechenden Ende des zweiten Quarzrohres 84 verbunden. Somit kann Flüssigkeit, beispielsweise hochgradig kontaminierte Rückspülflüssigkeit, welche über die erste Leitung 34 zu dem Reaktor 40 gelangt, zweimal durch das Reaktorinnere 41 geführt werden, nämlich beim Aufsteigen im ersten Quarzrohr 84 und beim Absteigen durch das zweite Quarzrohr 84. Bei jedem Durchlauf durch das Gehäuseinnere wird die Flüssigkeit sowohl UV-Strahlung ausgesetzt, da Quarz für UV-Strahlung durchlässig ist, als auch mit Ultraschall beaufschlagt, da die Quarzrohre den Ultraschall an die durch sie hindurchlaufende Flüssigkeit weitergeben. Hierdurch kann eine sehr effektive Reinigung des ersten Volumenstroms, welcher über die erste Leitung 34 zu dem Reaktor gelangt, gewährleistet werden. In Abhängigkeit von der Zahl der in Serie gelegten Quarzrohre 84 kann somit eine Mehrfach-Behandlung der Flüssigkeit erzielt werden, die von der Anzahl der vorgesehenen Quarzrohre 84 abhängt. Die vorliegende Erfindung ist nicht auf zwei Quarzrohr 84 beschränkt, sondern kann jede Anzahl an Quarzrohren 84 umfassen in Abhängigkeit von dem zu erzielenden Ergebnis. Zusätzlich kann die Reinigung durch die vorstehend erwähnte spiral- bzw. wendelförmige Anordnung der Flüssigkeitsleitung 42 in Form der Quarzrohre 84 um eine der UV-Lichtquellen 44 herum verstärkt werden.

Ein zweiter Volumenstrom (Hauptstrom) tritt über die zweite Leitung 50 und den in die Kavitationskammer 80 des Reaktors 40 mündenden Zulauf 46 in das Reaktorinnere 41 ein. In der Kavitationskammer 80 wird die eintretende Flüssigkeit des zweiten Volumenstroms nur mit Ultraschall der Ultraschallquelle 82 beaufschlagt. Der zweite Volumenstrom läuft im Reaktorinneren 41 vom Zulauf 46 zum Ablauf 48 und somit von der Kavitationskammer 80 in den oberen Teil des Reaktors 40. In diesem oberen Teil wird der zweite Volumenstrom weiterhin mit Ultraschall beaufschlagt und zusätzlich der UV-Strahlung ausgesetzt, welche von den in Quarzrohren angeordneten UV-Lichtquellen 44 ausgeht. Der zweite Volumenstrom verlässt dann über den Ablauf 48 den Reaktor 40 und wird in eine Rückführleitung 90 gespeist. Der erste Volumenstrom, der durch die Quarzrohre 84 gelaufen ist, wird über eine Injektordüse ebenfalls in die Rückführleitung 90 gespeist. Über die Rückführleitung 90 gelangt die solchermaßen behandelte gereinigte Flüssigkeit des ersten und/oder zweiten Volumenstroms entweder zurück in den Ballastwassertank 32 oder ins Meer (je nach Einstellung der in Figur 2 gezeigten Ventile in der Rückführleitung 90).

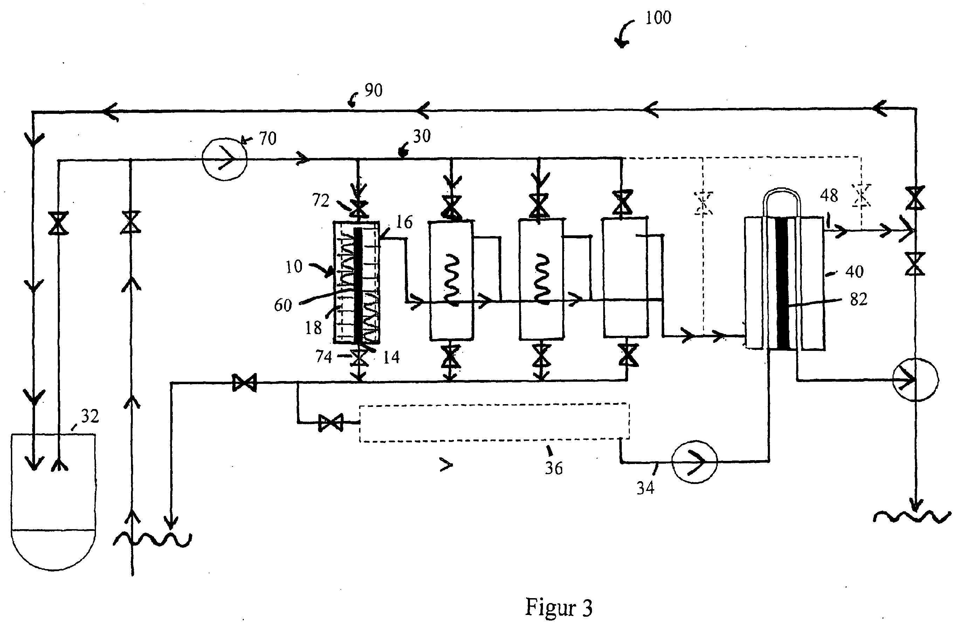

In Figur 3 ist eine Ausführungsform der Vorrichtung 100 beim Aufnehmen von Ballastwasser gezeigt.

Die Einlassventile 72 der ersten drei (von links) in Figur 3 dargestellten Filtermodule 10 sind vollständig geöffnet. Ebenso sind die entsprechenden Ventile 74 des jeweiligen ersten Auslasses 14 der ersten drei Filtermodule 10 zumindest teilweise geöffnet. Das Einlassventil 72 und das Ventil 74 des ersten Auslasses des vierten Filtermoduls 10 (d. h., des rechten Filtermoduls) sind beide geschlossen. Wie durch die Pfeile des ins Meer führenden Armes der Flüssigkeitszufuhr 30 angedeutet ist, sorgt die Ballastwasserpumpe 70 dafür, dass Wasser aus dem Meer in jedes der ersten drei Filtermodule 10 gelangt. In jedem der ersten drei Filtermodule 10 gelangt ein erster Teil des Wassers zum unteren Ende des Filtermoduls, ohne den Filter 18 zu durchsetzen, und tritt über den ersten Auslass 14 des jeweiligen Filtermoduls 10 aus, wobei dieser erste Teil des Wassers größere, im Wasser befindliche Objekte und Organismen aus dem jeweiligen Filtermodul 10 über eine in Fig. 3 dargestellte Abzweigung der ersten Leitung 34 gleich wieder ins Meer spült. Der zweite Teil des in das jeweilige Filtermodul 10 eintretenden Wassers durchsetzt den Filter 18 und gelangt über den jeweiligen zweiten Auslass 16 und die zweite Leitung 50 in das Innere des Reaktors 40. Im Inneren 41 des Reaktors 40 wird die Flüssigkeit mit Ultraschall der Ultraschallquelle 82 bestrahlt (nachdem sie zuvor bereits im Filtermodul 10 mit Ultraschall der Ultraschallquelle 60 beaufschlagt worden ist) und der UV-Strahlung der in Figur 3 nicht dargestellten UV-Lichtquelle 44 ausgesetzt. Das aus dem Ablauf 48 aus dem Reaktorinneren 41 wieder austretende Wasser gelangt über die Rückführleitung 90 in den Ballastwassertank 32. Das aufgenommene und in den Ballastwassertank 32 geleitete Wasser ist somit gefiltert und mit Hilfe von UV-Strahlung sowie Ultraschall desinfiziert und gereinigt worden.

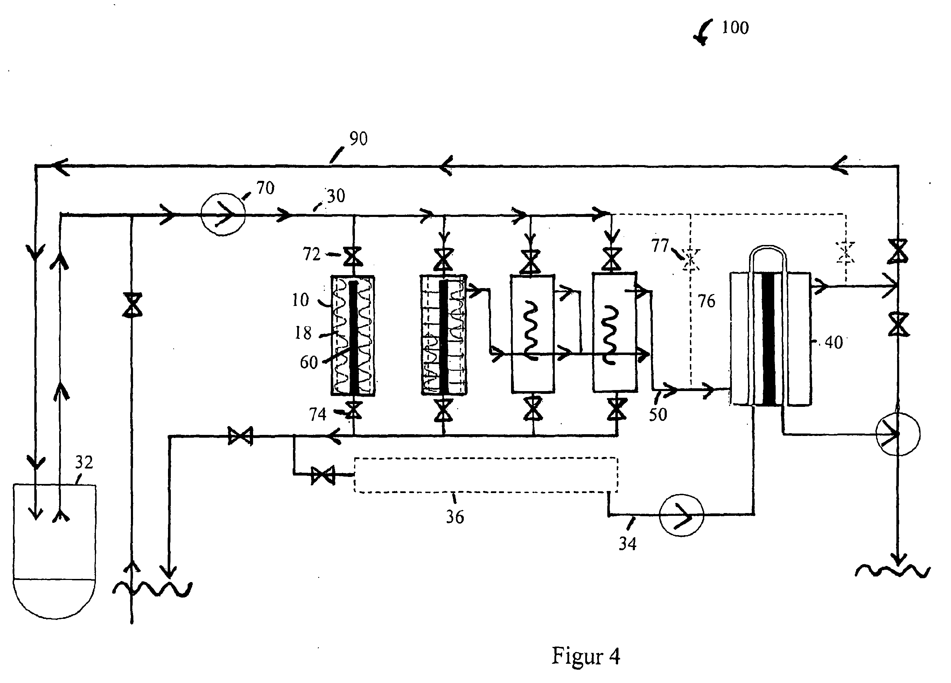

In Figur 4 ist eine Ausführungsform der Vorrichtung 100 bei der Zirkulation des im Ballastwassertank 32 befindlichen Wassers gezeigt.

Von den vier gezeigten Filtermodulen 10 sind die rechten drei an die Zuführung 30 angeschlossen (d.h., das jeweilige Einlassventil 72 ist geöffnet) und im Filterbetrieb. Das linke Filtermodul 10 ist abgekoppelt (Einlassventil 72 geschlossen) und befindet sich in einem Reinigungsmodus, in dem das mit Wasser gefüllte Filtermodul mit Ultraschall der Ultraschallquelle 60 zur Reinigung der Filtermembran 18 betrieben wird.

Das Wasser aus dem Ballastwassertank 32 wird von der Ballastwasserpumpe 70 zu den drei rechten Filtermodulen 10 geführt, in denen das Wasser gefiltert wird. Anschließend gelangt das solchermaßen gefilterte Wasser in den Reaktor 40, wo es einer Ultraschall- und UV-Licht-Behandlung unterzogen wird. Über die Rückführleitung 90 gelangt das gereinigte Wasser zurück in den Ballastwassertank 32.

Alternativ können in der in Fig. 4 gezeigten Ausführungsform die Filtermodule 10 über das Umgehungsventil 77 überbrückt werden und nur die Desinfektion des Reaktors 40 genutzt werden.

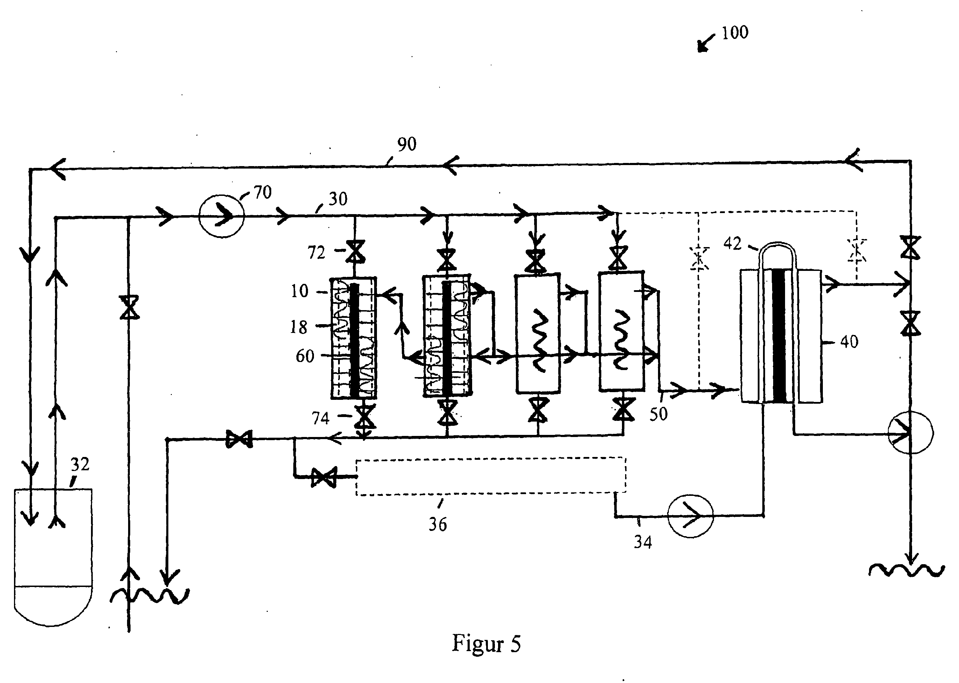

Figur 5 zeigt eine Ausführungsform der Vorrichtung 100 beim Reinigen des Wassers aus dem Ballastwassertank 32 analog zur Reinigung nach Figur 4.

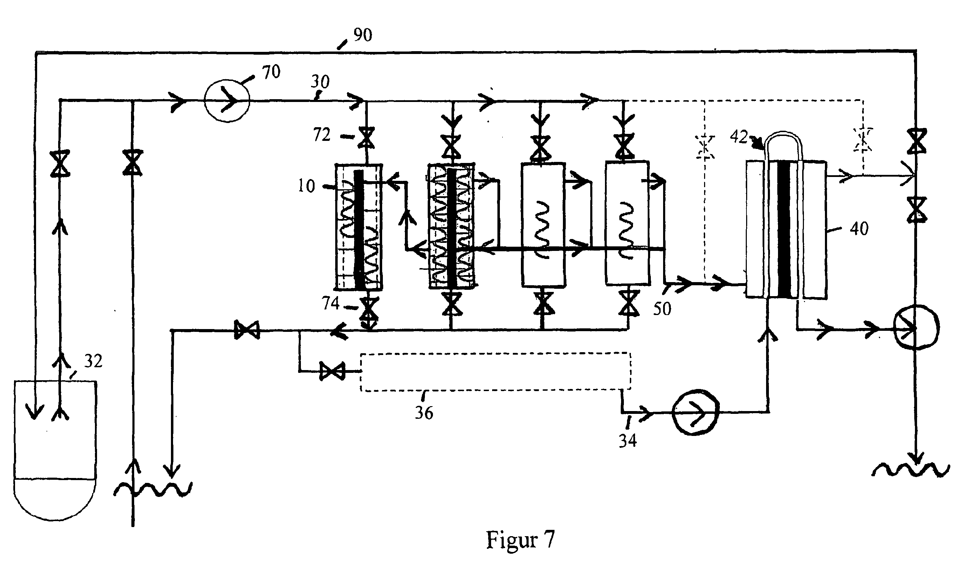

Wie in der Ausführungsform nach Fig. 4, sind die rechten drei Filtermodule 10 im Filtriermodus und das linke Filtermodul 10 im Reinigungsmodus. In Figur 5 ist zusätzlich die Rückspülung des ersten Filtermoduls 10 dargestellt. Anders als in Figur 4, ist das Ventil 74 des ersten Auslasses 14 des ersten Filtermoduls 10 (d. h., des linken Filtermoduls) zumindest teilweise geöffnet, so dass über die Rückspülleitung 20, welche die zweiten Auslässe 16 der vier gezeigten Filtermodule miteinander verbindet, gefilterte Flüssigkeit über den zweiten Auslass 16 des ersten Filtermoduls 10 rückwärts durch die Filtermembran 18 des ersten Filtermoduls 10 läuft und über den ersten Auslass 14 des ersten Filtermoduls 10 zurück ins Meer geleitet wird. Sollte der Reinheitsgrad der rückgespülten Flüssigkeit nicht ausreichen, um unmittelbar zurück ins Meer geleitet zu werden, kann die rückgespülte Flüssigkeit auch alternativ über die Leitung 34 zu dem Reaktor 40 geführt und über die Flüssigkeitsleitung 42 durch dessen Inneres 41 geleitet werden, um für eine zusätzliche Reinigung des rückgespülten Wassers zu sorgen (dargestellt in Figur 7). Hierbei kann das zweite Behältnis 36 als Zwischenspeicher für das rückgespülte Wasservolumen verwendet werden, so dass die rückgespülte Flüssigkeit beispielsweise mit einer geringeren Durchsatzrate und somit einer höheren Kontaktzeit durch das Innere 41 des Reaktors 40 geleitet werden kann.

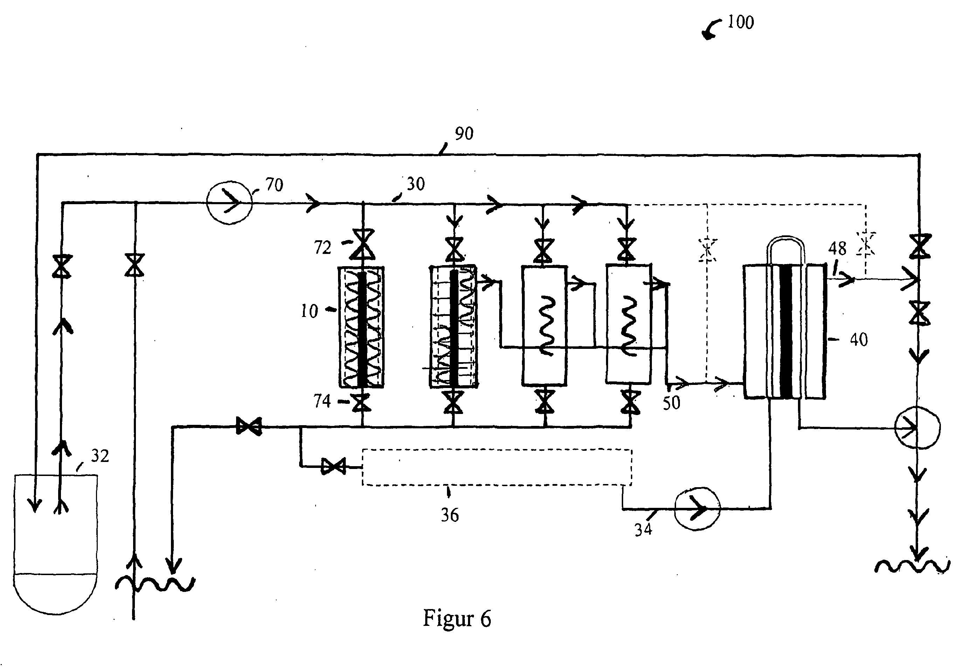

Figur 6 zeigt die Ausführungsform der Vorrichtung 100 beim Reinigen und anschließendem Abgeben des Ballastwassers aus dem Tank 32 zurück ins Meer.

Hierzu wird über die Pumpe 70 das Wasser aus dem Tank 32 in die rechten drei Filtermodule 10 gepumpt. Bei geschlossenen Ventilen 74 der jeweils ersten Auslässe 14 der rechten drei Module tritt das Ballastwasser durch die jeweilige Filtermembran 18 und gelangt gefiltert über die zweite Leitung 50 in das Reaktorinnere 41. Nach der Behandlung mit UV-Licht und Ultraschall im Reaktorinneren 41 tritt das Ballastwasser über die zweiten Auslässe 16 und den Ablauf 48 aus dem Reaktor 40 aus und kann als gereinigtes Wasser ins Meer abgegeben werden.

Figur 7 zeigt die Ausführungsform der Vorrichtung 100 beim Abgeben gespeicherten Ballastwassers und gleichzeitiger Rückspülung eines Filtermoduls 10.

Die drei rechten der vier dargestellten Filtermodule 10 sind im Filtermodus, wohingegen das linke Filtermodul 10 von der Zuführung 30 abgekoppelt und im Rückspülmodus ist. Über die erste Leitung 34 und das darin angeordnete zweite Behältnis 36 gelangt durch das erste Modul rückgespültes Wasser als erster Volumenstrom zu dem Reaktor 40 und wird über die Flüssigkeitsleitung 42 aus zwei Quarzrohren 84, wie vorstehend beschrieben, zwei Mal durch dessen Inneres 41 geführt und gereinigt. Über die zweite Leitung 50 gelangt von den rechten drei Modulen gefiltertes Wasser zu dem Reaktor 40 und läuft unmittelbar in und durch dessen Inneres 41, wodurch dieser zweite Volumenstrom ebenfalls gereinigt wird.

Der erste Volumenstrom aus rückgespültem Wasser aus dem ersten Filtermodul 10 und der zweite Volumenstrom gefilterten Wassers aus den anderen drei Filtermodulen 10 werden somit getrennt voneinander und mit unterschiedlichen Flussraten im Reaktor 40 desinfiziert und können im Anschluß ohne Probleme ins Meer abgegeben werden.

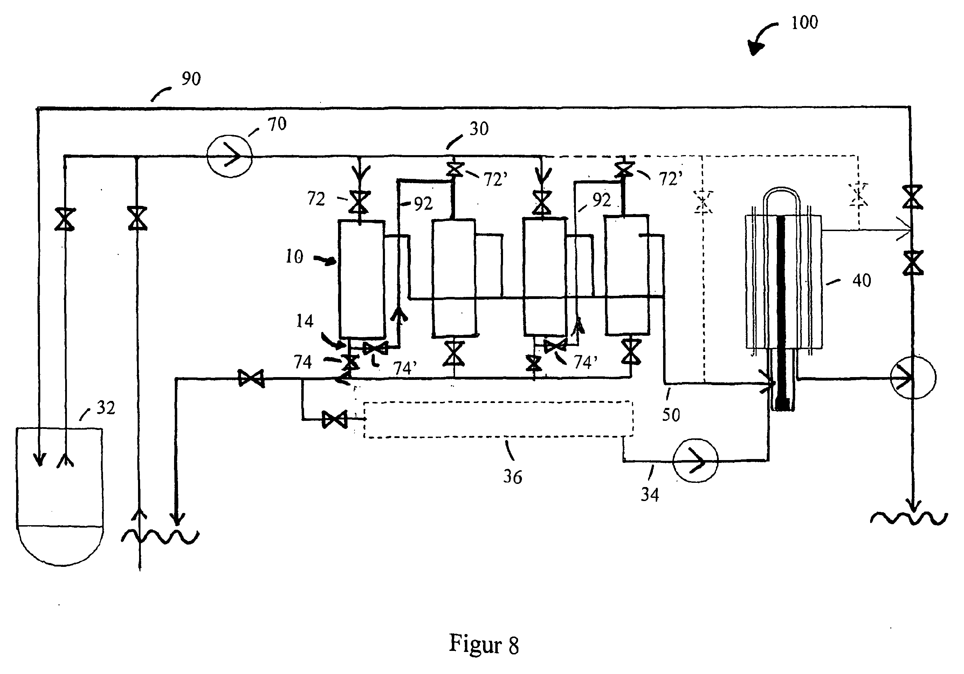

Figur 8 zeigt eine weitere Ausführungsform der Vorrichtung 100. Das erste (von links) Filtermodul weist eine Abzweigung 92 vom ersten Auslass 14 auf. Diese Abzweigung 92 ist mit dem Einlass 12 des zweiten (von links) Filtermoduls verbunden, so dass ungefilterte Flüssigkeit aus dem ersten Filtermodul im zweiten Filtermodul behandelt und gefiltert werden kann. Das dritte und vierte Filtermodul sind in gleicher Weise in Serie geschaltet.

Über die in Fig. 8 gezeigten Ventile 74, 74' kann die über den ersten Auslass 14 austretende Flüssigkeit zu der ersten Leitung 34 und/oder über die Abzweigung 92 geleitet werden.

Ferner kann über eine optionale Leitung mit Ventil 72' der Einlass des zweiten Filtermoduls auch an die Flüssigkeitszufuhr angeschlossen werden. Bei geschlossenem Ventil 74' kann somit die in Fig. 8 gezeigte Vorrichtung 100 auch wie vorstehend in Bezug auf die Fig. 1 bis 7 dargestellt betrieben werden.

Die in der vorstehenden Beschreibung, den Ansprüchen und den Zeichnungen offenbarten Merkmale können sowohl einzeln als auch in beliebiger Kombination für die Ausführung der Erfindung in ihren verschiedenen Ausgestaltungen von Bedeutung sein.

### Bezugszeichenliste

- Vorrichtung zur Reinigung von Flüssigkeiten: 100
- Filtermodul: 10
- Einlass: 12
- Erster Auslass: 14
- Zweiter Auslass: 16
- Filter, Membran: 18
- Rückspülleitung: 20
- Flüssigkeitszufuhr: 30
- Erstes Behältnis: 32
- Erste Leitung: 34
- Zweites Behältnis: 36
- Reaktor: 40
- Reaktorinneres: 41
- Flüssigkeitsleitung: 42
- UV-Lichtquelle: 44
- Reaktorzulauf: 46
- Reaktorablauf: 48
- Zweite Leitung: 50
- Ultraschallquelle: 60
- Ballastwasserpumpe: 70
- Einlassventil: 72, 72'
- Ventil des ersten Auslasses: 74, 74'
- Erste Umgehungsleitung: 76
- Erstes Umgehungsventil: 77
- Zweite Umgehungsleitung: 78
- Kavitationskammer: 80
- Ultraschallquelle (Reaktor): 82
- Quarzrohr: 84
- Rohrverbindung: 86
- Rückführleitung: 90
- Abzweigung: 92

## Patentansprüche

1. Vorrichtung zur Reinigung von Flüssigkeiten, welche umfasst
mindestens zwei Filtermodule (10); und
einen Reaktor (40) mit mindestens einer UV-Lichtquelle (44),
wobei jedes Filtermodul (10) einen Einlass (12) für zu reinigende Flüssigkeit, einen ersten Auslass (14), einen Filter (18) und einen zweiten Auslass (16) für gefilterte Flüssigkeit umfasst, wobei für über den Einlass (12) einströmende Flüssigkeit der erste Auslass (14) vor dem Filter (18) und der zweite Auslass (16) hinter dem Filter (18) angeordnet ist,
wobei der Reaktor (40) mit den ersten Auslässen (14) über eine erste Leitung (34) und mit den zweiten Auslässen (16) über eine zweite Leitung (50) verbunden ist, und
wobei der Reaktor (40) dazu eingerichtet ist, einen ersten Volumenstrom, der über die erste Leitung (34) zu dem Reaktor (40) gelangt, und einen zweiten Volumenstrom, der über die zweite Leitung (50) zu dem Reaktor (40) gelangt, UV-Licht der UV-Lichtquelle (44) auszusetzen.

2. Vorrichtung nach Anspruch 1, welche dazu eingerichtet ist, den ersten Volumenstrom und den zweiten Volumenstrom getrennt voneinander durch den Reaktor zu leiten.

3. Vorrichtung nach Anspruch 1 oder Anspruch 2, wobei die zweiten Auslässe (16) über eine Rückspülleitung (20) derart verbunden sind, dass eine Rückspülung des Filters (18) des einen Filtermoduls (10) mit gefilterter Flüssigkeit des anderen Filtermoduls (10) erfolgen kann.

4. Vorrichtung nach einem der vorhergehenden Ansprüche, wobei der Einlass (12) jedes Filtermoduls (10) ein Einlassventil (72) umfasst, und/oder wobei der erste Auslass (14) jedes Filtermoduls (10) ein Auslassventil (74) umfasst.

5. Vorrichtung nach Anspruch 4, wobei die zweiten Auslässe (16) untereinander über eine Rückspülleitung (20) derart verbunden sind, dass bei geschlossenem Einlassventil (72) des Einlasses (12) des einen Filtermoduls (10) und geöffnetem Auslassventil (74) des ersten Auslasses (14) des einen Filtermoduls (10) eine Rückspülung des Filters (18) des einen Filtermoduls (10) mit gefilterter Flüssigkeit des anderen Filtermoduls (10) erfolgen kann.

6. Vorrichtung nach einem der Ansprüche 3 bis 5, welche dazu eingerichtet ist, die durch den Filter (18) des einen Filtermoduls (10) rückgespülte Flüssigkeit über die erste Leitung (34) als ersten Volumenstrom an den Reaktor (40) zu leiten.

7. Vorrichtung nach einem der vorhergehenden Ansprüche, wobei der Reaktor (40) ferner eine Ultraschallquelle (82) zur Beaufschlagung des ersten und des zweiten Volumenstroms mit Ultraschall umfasst.

8. Vorrichtung nach einem der vorhergehenden Ansprüche, wobei die UV-Lichtquelle (44) und die Ultraschallquelle (82) im Reaktorinneren (41) angeordnet sind.

9. Vorrichtung nach einem der vorhergehenden Ansprüche, wobei der Reaktor (40) eine Flüssigkeitsleitung (42) umfasst, die durch das Reaktorinnere (41) führt und im Reaktorinneren (41) relativ zum Reaktorinneren abgeschlossen ist, wobei die Flüssigkeitsleitung (42) vorzugsweise mit der ersten Leitung (34) derart verbunden ist, dass der erste Volumenstrom durch das Reaktorinnere (41) über die Flüssigkeitsleitung (42) läuft.

10. Vorrichtung nach Anspruch 9, wobei die Flüssigkeitsleitung (42) aus UV-durchlässigem Material gebildet ist.

11. Vorrichtung nach Anspruch 9 oder 10, wobei die Flüssigkeitsleitung (42) ein oder mehrere Quarzrohre (84) umfasst, die das Reaktorinnere (41) durchsetzen und parallel oder in Reihe gelegt sind.

12. Vorrichtung nach einem der vorhergehenden Ansprüche, wobei jedes Filtermodul (10) eine Ultraschallquelle (60) zum Bestrahlen des Filters (18) mit Ultraschall umfasst.

13. Vorrichtung nach einem der vorhergehenden Ansprüche, wobei die Vorrichtung dazu eingerichtet ist, Ballastwasser zu reinigen.

14. Vorrichtung nach einem der vorhergehenden Ansprüche, wobei zwei Filtermodule (10) dadurch in Serie geschaltet sind, dass der erste Auslass (14) des ersten Filtermoduls mit dem Einlass (12) des zweiten Filtermoduls verbunden ist.

15. Verwendung einer Vorrichtung nach einem der vorhergehenden Ansprüche zum Behandeln von Ballastwasser, wobei vorzugsweise abwechselnd je eines der Filtermodule (10) rückgespült wird.

## Claims

1. Apparatus for purifying liquids, comprising
at least two filter modules (10); and
a reactor (40) with at least one UV-light source (44),
wherein each filter module (10) comprises an inlet (12) for the liquid to be purified, a first outlet (14), a filter (18), and a second outlet (16) for the filtered liquid, wherein for liquid incoming through the inlet (12) the first outlet (14) is positioned before the filter (18), and the second outlet (16) behind the filter (18),
wherein the reactor (40) is connected with the first outlets (14) through a first line (34) and with the second outlets (16) through a second line (50), and
wherein the reactor (40) is adapted to expose a first volume flow that reaches the reactor (40) through the first line (34), and a second volume flow that reaches the reactor (40) through the second line (50), to UV-light from the UV-light source (44).

2. Apparatus according to claim 1, which is adapted to separately direct the first volume flow and the second volume flow through the reactor.

3. Apparatus according to claim 1 or claim 2, wherein the second outlets (16) are connected through a back-flushing line (20) in such a way that a back-flushing of the filter (18) of a filter module (10) can be carried out with filtered liquid from the other filter module (10).

4. Apparatus according to any of the preceding claims, wherein the inlet (12) of each filter module (10) comprises an inlet vent (72) and/or wherein the first outlet (14) of each filter module (10) comprises an outlet vent (74).

5. Apparatus according to claim 4, wherein the second outlets (16) are connected with each other through a back-flushing line (20) in such a way that upon a closed inlet vent (72) of the inlet (12) of one filter module (10), and an opened outlet vent (74) of the first outlet (14) of one filter module (10), a back-flushing of the filter (18) of one filter module (10) with filtered liquid of the other filter module (10) can be carried out.

6. Apparatus according to any of claims 3 to 5, which is adapted to direct the liquid as back-flushed through the filter (18) of one filter module (10) through the first line (34) as a first volume flow to the reactor (40).

7. Apparatus according to any of the preceding claims, wherein the reactor (40) further comprises a source of ultrasound (82) for exposing the first and the second volume flow to ultrasound.

8. Apparatus according to any of the preceding claims, wherein the UV-light source (44) and the source of ultrasound (82) are positioned inside the reactor (41).

9. Apparatus according to any of the preceding claims, wherein the reactor (40) comprises a line for liquids (42), which leads through the inside of the reactor (41), and is in the inside of the reactor (41) and self-contained relative to the inside of the reactor, wherein the line for liquids (42) preferably is connected to the first line (34) in such a way that the first volume flow flows through the inside of the reactor (41) through the line for liquids (42).

10. Apparatus according to claim 9, wherein the line for liquids (42) is formed out of UV-permeable material.

11. Apparatus according to claim 9 or 10, wherein the line for liquids (42) comprises one or several quartz pipes (84) that cross the inside of the reactor (41) and are arranged in parallel or in series.

12. Apparatus according to any of the preceding claims, wherein each filter module (10) comprises a source of ultrasound (60) for irradiating the filters (18) with ultrasound.

13. Apparatus according to any of the preceding claims, wherein the apparatus is adapted to purify ballast water.

14. Apparatus according to any of the preceding claims, wherein two filter modules (10) are connected in series by connecting the first outlet (14) of the first filter module to the inlet (12) of the second filter module.

15. Use of an apparatus according to any of the preceding claims for the treatment of ballast water, wherein preferably each one of the filter modules (10) is back-flushed in succession.

## Revendications

1. Appareil permettant de purifier des liquides, comprenant
au moins deux modules de filtration (10) ; et
un réacteur (40) avec au moins une source de lumière UV (44),
où chaque module de filtration (10) comporte une entrée (12) pour le liquide à purifier, une première sortie (14), un filtre (18), et une deuxième sortie (16) pour le liquide filtré, où pour un liquide rentrant à travers l'entrée (12) la première sortie (14) est positionnée avant le filtre (18), et la deuxième sortie (16) est derrière le filtre (18),
dans lequel le réacteur (40) est relié aux première sorties (14) par l'intermédiaire d'une première ligne (34) et avec les deuxième sorties (16) par l'intermédiaire d'une deuxième ligne (50), et
dans lequel le réacteur (40) est conçu pour exposer un premier flux de volume qui arrive au réacteur (40) par la première ligne (34), et un deuxième flux de volume qui arrive au réacteur (40) par la deuxième ligne (50), à la lumière UV provenant de la source de lumière UV (44).

2. Appareil selon la revendication 1, qui est adapté pour diriger séparément le premier flux de volume et le deuxième flux de volume à travers le réacteur.

3. Appareil selon la revendication 1 ou 2, dans lequel les deuxièmes sorties (16) sont reliées par une ligne de rétro-balayage (20) de sorte à pouvoir effectuer le rétro-balayage du filtre (18) d'un module de filtration (10) à l'aide d'un liquide filtré issu de l'autre module de filtration (10).

4. Appareil selon l'une quelconque des revendications précédentes, dans lequel l'entrée (12) de chaque module de filtration (10) comporte un évent d'entrée (72) et/ou dans lequel la première sortie (14) de chaque module de filtration (10) comporte un évent de sortie (74).

5. Appareil selon la revendication 4, dans lequel les deuxième sorties (16) sont reliées les unes aux autres par une ligne de rétro-balayage (20) de sorte qu'à la fermeture d'un évent d'entrée (72) de l'entrée (12) d'un module de filtration (10), et d'un évent de sortie ouvert (74) de la première sortie (14) d'un module de filtration (10), on puisse effectuer un rétro-balayage du filtre (18) d'un module de filtration (10) avec un liquide filtré de l'autre module de filtration (10).

6. Appareil selon l'une des revendications 3 à 5, qui est conçu pour diriger le liquide rétro-balayé à travers le filtre (18) d'un module de filtration (10) à travers la première ligne (34) comme un premier flux de volume vers le réacteur (40).

7. Appareil selon l'une quelconque des revendications précédentes, dans lequel le réacteur (40) comprend en outre une source d'ultrasons (82) pour exposer le premier et le deuxième flux de volume à un ultrason.

8. Appareil selon l'une quelconque des revendications précédentes, dans lequel la source de lumière UV (44) et la source d'ultrasons (82) sont positionnées à l'intérieur du réacteur (41).

9. Appareil selon l'une quelconque des revendications précédentes, dans lequel le réacteur (40) comprend une ligne à liquides (42), qui mène vers l'intérieur du réacteur (41), et se trouve à l'intérieur du réacteur (41) et est indépendante de l'intérieur du réacteur, où la ligne à liquides (42) est de préférence reliée à la première ligne (34) de sorte que le premier flux de volume circule à travers l'intérieur du réacteur (41) par la ligne à liquides (42).

10. Appareil selon la revendication 9, dans lequel la ligne à liquides (42) est formée d'un matériau perméable aux UV.

11. Appareil selon la revendication 9 ou 10, dans lequel la ligne à liquides (42) comporte un ou plusieurs tubes de quartz (84) qui traversent l'intérieur du réacteur (41) et sont disposés en parallèle ou en série.

12. Appareil selon l'une quelconque des revendications précédentes, dans lequel chaque module de filtration (10) comporte une source d'ultrasons (60) pour irradier les filtres (18) avec des ultrasons.

13. Appareil selon l'une quelconque des revendications précédentes, dans lequel l'appareil est conçu pour purifier l'eau de ballastage.

14. Appareil selon l'une quelconque des revendications précédentes, dans lequel deux modules de filtration (10) sont reliés en série en reliant la première sortie (14) du premier module de filtration à l'entrée (12) du deuxième module de filtration.

15. Utilisation d'un appareil selon l'une des revendications précédentes pour le traitement de l'eau de ballastage, où de préférence les modules de filtration (10) sont successivement rétro-balayés.
